# EUROPEAN PATENT APPLICATION

(11) **EP 2 727 881 A1**
(43) Date of publication of application: **07.05.2014**
(21) Application number: 12807037.2
(22) Date of filing: 30.05.2012
(51) Int. Cl.: C01B 31/02, B82Y 30/00, C09J 7/02, D04H 1/4242

(54) **AGGREGATION OF FIBROUS COLUMNAR STRUCTURES**

(30) Priority: 01.07.2011 JP 2011146930
(71) Applicant: Nitto Denko Corporation, Ibaraki-shi Osaka 567-8680 (JP)
(72) Inventor: MAENO, Youhei, Osaka 567-8680 (JP)
(74) Representative: Müller-Boré & Partner Patentanwälte PartG mbB
(86) International application number: PCT/JP2012/063906
(87) International publication number: WO 2013/005511

(57) **Abstract**

Provided is a fibrous columnar structure aggregate including a plurality of fibrous columnar structures on a surface of a substrate, the fibrous columnar structure aggregate having an extremely high adhesion strength between the substrate and the fibrous columnar structures. Afibrous columnar structure aggregate **(10)** is a fibrous columnar structure aggregate including: a substrate **(1)**; and a plurality of fibrous columnar structures **(2)** provided on a surface of the substrate, in which: one end **(2a)** of each of the plurality of fibrous columnar structures is adhered to the surface of the substrate; and an adhesion strength between the plurality of fibrous columnar structures and the surface of the substrate is 25 N/cm² or more at 25°C.

## Description

### Technical Field

The present invention relates to a fibrous columnar structure aggregate, and more specifically, to a fibrous columnar structure aggregate including a plurality of fibrous columnar structures on a surface of a substrate. The present invention also relates to a pressure-sensitive adhesive member including the fibrous columnar structure aggregate.

### Background Art

A fibrous columnar structure can exhibit unique properties resulting from its structure and the like. In particular, a carbon nanotube is expected to be developed into various functional materials by virtue of unique properties that can be exhibited by the carbon nanotube, and various studies have been made for its quality, productivity, applications, and the like. A possible approach to putting the carbon nanotube into practical use as a functional material is, for example, to produce an aggregate formed of many carbon nanotubes and improve characteristics of the aggregate.

As an application of the carbon nanotube aggregate, for example, there is given a pressure-sensitive adhesive (see Patent Literature 1 and Patent Literature 2). Various materials have been used as pressure-sensitive adhesives for industrial applications, and most of the materials are viscoelastic bodies subjected to flexible bulk designing. Because of its low modulus, the viscoelastic body becomes wet to conform to an adherend, thereby exhibiting its adhesive strength. Meanwhile, it has been elucidated that the carbon nanotube follows the surface unevenness of the adherend to exert its adhesive strength by virtue of the van der Waals force because the carbon nanotube has a nanoscale diameter. However, itspressure-sensitive adhesive characteristics are insufficient in some cases.

The carbon nanotube aggregate can be applied to various applications such as a pressure-sensitive adhesive member.

In this connection, the carbon nanotube aggregate is generally formed by being grown on a growth substrate under a high temperature of 400°C or more, and hence a rigid and highly heat-resistant material such as a silicon wafer is used for the growth substrate. However, adhesion property between such growth substrate and the carbon nanotube is low (see Patent Literature 3 and Patent Literature 4), and hence when the carbon nanotube aggregate is used for a pressure-sensitive adhesive member or the like, it is necessary to peel the carbon nanotube aggregate formed on the growth substrate from the growth substrate and fix the carbon nanotube aggregate to another substrate. Accordingly, it is difficult to use a member in which the carbon nanotube aggregate is provided on the growth substrate, the member being obtained in the step of forming the carbon nanotube aggregate, for a pressure-sensitive adhesive member or the like as it is.

### Citation List

### Patent Literature

[PTL 1] US 2004/0071870 A1
[PTL 2] US 2006/0068195 A1
[PTL 3] JP 2005-97111 A
[PTL 4] JP 2004-67413 A

### Summary of Invention

### Technical Problem

An object of the present invention is to provide a fibrous columnar structure aggregate including a plurality of fibrous columnar structures on a surface of a substrate, the fibrous columnar structure aggregate having an extremely high adhesion strength between the substrate and the fibrous columnar structures.

### Solution to Problem

A fibrous columnar structure aggregate of the present invention is a fibrous columnar structure aggregate including: a substrate; and a plurality of fibrous columnar structures provided on a surface of the substrate, in which: one end of each of the plurality of fibrous columnar structures is adhered to the surface of the substrate; and an adhesion strength between the plurality of fibrous columnar structures and the surface of the substrate is 25 N/cm² or more at 25°C.

In a preferred embodiment of the present invention, the substrate has a surface roughness Ra of 50 nm to 2,000 nm.

In a preferred embodiment of the present invention, a material for the substrate has a melting point of 500°C or more.

In a preferred embodiment of the present invention, a growth substrate on which the plurality of fibrous columnar structures are to be grown is used as it is as the substrate.

In a preferred embodiment of the present invention, the fibrous columnar structures are carbon nanotubes.

In another embodiment of the present invention, there is provided a pressure-sensitive adhesive member. The pressure-sensitive adhesive member of the present invention includes the fibrous columnar structure aggregate of the present invention.

### Advantageous Effects of Invention

According to the present invention, it is possible to provide the fibrous columnar structure aggregate including a plurality of fibrous columnar structures on a surface of a substrate, the fibrous columnar structure aggregate having an extremely high adhesion strength between the substrate and the fibrous columnar structures.

### Brief Description of Drawings

FIG. **1** is a schematic sectional view of a fibrous columnar structure aggregate in a preferred embodiment of the present invention.
FIG. **2** is a schematic sectional view of a fibrous columnar structure aggregate-producing apparatus in a preferred embodiment of the present invention.

### Description of Embodiments

### <<Fibrous columnar structure aggregate>>

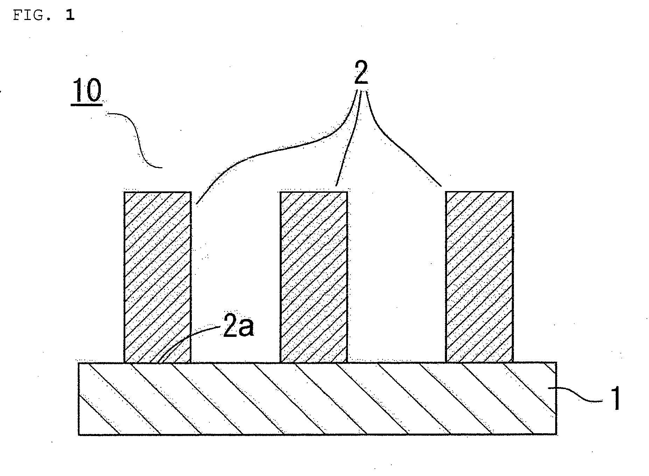

FIG. **1** illustrates a schematic sectional view of a fibrous columnar structure aggregate in a preferred embodiment of the present invention (the view is not precisely illustrated to scale in order that each constituent portion may be clearly illustrated). The fibrous columnar structure aggregate of the present invention includes a plurality of fibrous columnar structures on a surface of a substrate. In FIG. **1****,** a fibrous columnar structure aggregate **10** includes a substrate **1** and fibrous columnar structures **2.** In the fibrous columnar structure aggregate of the present invention, one end of each of the plurality of fibrous columnar structures is adhered to the surface of the substrate. In FIG. **1****,** one end **2a** of each of the fibrous columnar structures is fixed to the substrate **1.** The fibrous columnar structures **2** are aligned in a lengthwise direction L. The fibrous columnar structures **2** are preferably aligned in a direction substantially perpendicular to the substrate **1.**

The fibrous columnar structure aggregate of the present invention has an adhesion strength between the plurality of fibrous columnar structures and the surface of the substrate of 25 N/cm² or more, preferably 30 N/cm² or more, more preferably 35 N/cm² or more, still more preferably 40 N/cm² or more, particularly preferably 45 N/cm² or more, most preferably 50 N/cm² or more at 25°C. The upper limit of the adhesion strength is desirably as high as possible, but in actuality, is preferably 10, 000 N/cm² or less, more preferably 5,000 N/cm² or less, still more preferably 1,000 N/cm² or less, particularly preferably 500 N/cm² or less, most preferably 300 N/cm² or less at 25°C. When the adhesion strength between the plurality of fibrous columnar structures and the surface of the substrate falls within the range, the fibrous columnar structure aggregate of the present invention can be a fibrous columnar structure aggregate having an extremely high adhesion strength between the substrate and the fibrous columnar structures, and the fibrous columnar structure aggregate can be used as it is for a pressure-sensitive adhesive member or the like. The adhesion strength of 25 N/cm² or more at 25°C, which can be exhibited by the fibrous columnar structure aggregate of the present invention, is an extremely high adhesion strength that has been difficult to achieve in a related art fibrous columnar structure aggregate including a plurality of fibrous columnar structures on a surface of a substrate.

In the fibrous columnar structure aggregate of the present invention, it is preferred that a growth substrate on which the plurality of fibrous columnar structures are to be grown be used as it is as the substrate. In a related art fibrous columnar structure aggregate, adhesion property between the growth substrate and the fibrous columnar structures is low, and hence when the produced fibrous columnar structure aggregate is used for a pressure-sensitive adhesive member or the like, it is necessary to peel the plurality of fibrous columnar structures formed on the growth substrate from the growth substrate and fix the plurality of fibrous columnar structures to another substrate. In the fibrous columnar structure aggregate of the present invention, adhesion property between the growth substrate and the fibrous columnar structures is high, and hence when the fibrous columnar structure aggregate is used for a pressure-sensitive adhesive member or the like, it is not necessary to peel the plurality of fibrous columnar structures formed on the growth substrate from the growth substrate and fix the plurality of fibrous columnar structures to another substrate. The fibrous columnar structure aggregate in which the plurality of fibrous columnar structures are provided on the growth substrate can be used as it is as the fibrous columnar structure aggregate of the present invention for a pressure-sensitive adhesive member or the like.

### (Fibrous columnar structures)

Any appropriate material may be adopted as a material for each of the fibrous columnar structures. Examples of the material for each of the fibrous columnar structures include: metals such as aluminum and iron; inorganic materials such as silicon; carbon materials such as a carbon nanofiber and a carbon nanotube; and high-modulus resins such as an engineering plastic and a super engineering plastic. Specific examples of the resins include polyimide, polyethylene, polypropylene, polyethylene terephthalate, acetylcellulose, polycarbonate, and polyamide. Any appropriate physical property may be adopted as each of the various physical properties of any such resin such as a molecular weight as long as the object of the present invention can be achieved.

With regard to the shape of each of the fibrous columnar structures, the lateral section of the structure has only to have any appropriate shape. The lateral section is of, for example, a substantially circular shape, an elliptical shape, or an n-gonal shape (where n represents an integer of 3 or more). In addition, the fibrous columnar structures may be hollow, or may be filled materials.

The length of each of the fibrous columnar structures may be set to any appropriate length. The length of each of the fibrous columnar structures is preferably 50 µm or more, more preferably 50 µm to 10,000 µm, still more preferably 100 µm to 1,000 µm, particularly preferably 200 µm to 800 µm. In the present invention, when the length of each of the fibrous columnar structures falls within the range, the fibrous columnar structures can exhibit excellent mechanical characteristics, and the fibrous columnar structures can provide a fibrous columnar structure aggregate exhibiting excellent pressure-sensitive adhesive characteristics.

When the lateral section of each of the fibrous columnar structures has a substantially circular shape, its diameter may be set to any appropriate length. The diameter is preferably 0.1 nm to 2, 000 nm, more preferably 1 nm to 1, 000 nm, still more preferably 1 nm to 500 nm, particularly preferably 2 nm to 100 nm. In the present invention, when the lateral section of each of the fibrous columnar structures has a substantially circular shape and its diameter falls within the range, the fibrous columnar structures can exhibit excellent mechanical characteristics, and the fibrous columnar structures can provide a fibrous columnar structure aggregate exhibiting excellent pressure-sensitive adhesive characteristics.

The fibrous columnar structures are preferably metal materials or inorganic materials, more preferably carbon nanotubes.

When the fibrous columnar structures are carbon nanotubes, the carbon nanotubes may be single-walled or multi-walled. In addition, when the fibrous columnar structures are carbon nanotubes, the diameter, specific surface area, and density of each of the carbon nanotubes may be set to any appropriate values.

When the fibrous columnar structures are carbon nanotubes, with regard to the shape of each of the carbon nanotubes, the lateral section of the carbon nanotube has only to have any appropriate shape. The lateral section has, for example, a substantially circular shape, an elliptical shape, or an n-gonal shape (n represents an integer of 3 or more).

When the fibrous columnar structures are carbon nanotubes, the length of each of the carbon nanotubes may be set to any appropriate length. The length of each of the carbon nanotubes is preferably 50 µm or more, more preferably 50 µm to 10, 000 µm, still more preferably 100 µm to 1,000 µm, particularly preferably 200 µm to 800 µm. In the present invention, when the fibrous columnar structures are carbon nanotubes and the length of each of the carbon nanotubes falls within the range, the carbon nanotubes can exhibit excellent mechanical characteristics, and the carbon nanotubes can provide a carbon nanotube aggregate exhibiting excellent pressure-sensitive adhesive characteristics.

### (Substrate)

Any appropriate material may be adopted as a material for the substrate. Examples of the material for the substrate include quartz glass, silicon (such as a silicon wafer), an engineering plastic, and a super engineering plastic. Specific examples of the engineering plastic and the super engineering plastic include polyimide, polyethylene, polyethylene terephthalate, acetylcellulose, polycarbonate, polypropylene, and polyamide.

The substrate has a surface roughness Ra of preferably 50 nm to 2, 000 nm, more preferably 70 nm to 2,000 nm, still more preferably 100 nm to 1,500 nm, particularly preferably 150 nm to 1,000 nm. When the surface roughness Ra of the substrate falls within the range, a fibrous columnar structure aggregate having an extremely high adhesion strength between the substrate and the fibrous columnar structures can be easily provided, and the fibrous columnar structure aggregate can be used as it is for a pressure-sensitive adhesive member or the like.

Any appropriate means may be adopted as means for causing the substrate to have a surface roughness Ra within the range. Examples thereof include metal rolling, unevenness control with a generated wall surface of an electrolytic film, sandblasting, and etching (for example, by photolithographic patterning).

The material for the substrate has a melting point of preferably 500°C or more, more preferably 600°C or more, still more preferably 700°C or more. The upper limit of the melting point of the material for the substrate is desirably as high as possible, but in actuality, is preferably 2,000°C or less, more preferably 1,800°C or less, still more preferably 1,500°C or less. When the melting point of the material for the substrate falls within the range, a fibrous columnar structure aggregate having an extremely high adhesion strength between the substrate and the fibrous columnar structures can be easily provided, and the fibrous columnar structure aggregate can be used as it is for a pressure-sensitive adhesive member or the like.

Any appropriate thickness may be adopted as the thickness of the substrate. The thickness of the substrate is preferably 1 µm to 1, 000 µm, more preferably 5 µm to 500 µm, still more preferably 10 µm to 200 µm. When the thickness of the substrate falls within the range, a fibrous columnar structure aggregate having an extremely high adhesion strength between the substrate and the fibrous columnar structures can be easily provided, and the fibrous columnar structure aggregate can be used as it is for a pressure-sensitive adhesive member or the like.

### << <<Method of producing fibrous columnar structure aggregate>> >>

The fibrous columnar structure aggregate of the present invention may be produced by any appropriate method as long as a fibrous columnar structure aggregate including a plurality of fibrous columnar structures on a surface of a substrate can be produced and one end of each of the plurality of fibrous columnar structures can be adhered to the surface of the substrate.

As an example of a method of producing the fibrous columnar structure aggregate, according to a preferred embodiment of the present invention, a production method in the case where the fibrous columnar structures are carbon nanotubes is described.

The fibrous columnar structure aggregate of the present invention may be obtained by, for example, forming an Al₂O₃ film on a surface of a smooth substrate by vapor deposition, forming a catalyst layer on the Al₂O₃ film, and growing carbon nanotubes on the catalyst layer. In this case, a chemical vapor-phase growth method (chemical vapor deposition: CVD method) is preferably used. According to such method, it is possible to produce a fibrous columnar structure aggregate in which a plurality of carbon nanotubes are grown and formed on the substrate while being aligned substantially perpendicularly to the substrate.

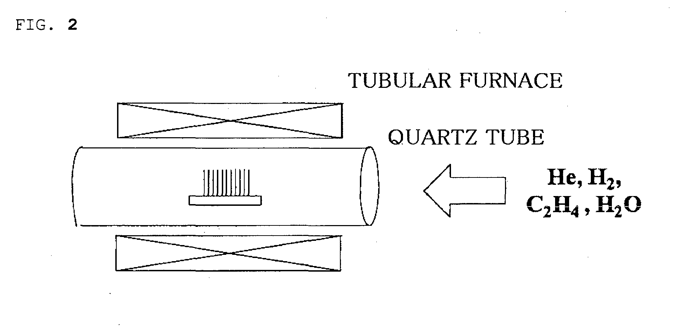

Any appropriate apparatus may be adopted as an apparatus for producing the fibrous columnar structure aggregate of the present invention. An example thereof is a thermal CVD apparatus such as a hot wall type constructed by surrounding a cylindrical reaction vessel with a resistance heating electric tubular furnace as illustrated in FIG. **2****.** In this case, for example, a heat-resistant quartz tube is preferably used as the reaction vessel.

The Al₂O₃ film has a thickness of preferably 50 nm or less, more preferably 0.01 nm to 30 nm, still more preferably 0.1 nm to 20 nm, particularly preferably 1 nm to 15 nm, most preferably 1 nm to 10 nm.

When the thickness of the Al₂O₃ film falls within the range, a fibrous columnar structure aggregate having an extremely high adhesion strength between the substrate and the fibrous columnar structures can be easily provided, and the fibrous columnar structure aggregate can be used as it is for a pressure-sensitive adhesive member or the like.

Any appropriate method may be adopted as a method of forming the catalyst layer. Examples thereof include a method involving depositing a metal catalyst from the vapor, for example, with an electron beam (EB) or by sputtering, and a method involving applying a suspension of metal catalyst fine particles onto a substrate.

Any appropriate catalyst may be used as the catalyst to be used for forming the catalyst layer (material for the catalyst layer). Examples thereof include metal catalysts such as iron, cobalt, nickel, gold, platinum, silver, and copper.

The catalyst layer has a thickness of preferably 0.01 nm to 20 nm, more preferably 0.1 nm to 10 nm, still more preferably 0.1 nm to 5 nm, particularly preferably 0.1 nm to 3 nm. When the thickness of the catalyst layer falls within the range, a fibrous columnar structure aggregate having an extremely high adhesion strength between the substrate and the fibrous columnar structures can be easily provided, and the fibrous columnar structure aggregate can be used as it is for a pressure-sensitive adhesive member or the like.

Any appropriate carbon source may be used as the carbon source to be used as the material for the carbon nanotubes. Examples thereof include: hydrocarbons such as methane, ethylene, acetylene, and benzene; and alcohols such as methanol and ethanol.

Any appropriate temperature may be adopted as a production temperature in the production of the fibrous columnar structure aggregate of the present invention. The temperature is preferably 400°C to 1,000°C, more preferably 500°C to 900°C, still more preferably 600°C to 800°C.

### << <<Pressure-sensitive adhesive member>> >>

The fibrous columnar structure aggregate of the present invention can be used to provide a pressure-sensitive adhesive member. Preferably, such pressure-sensitive adhesive member may be the fibrous columnar structure aggregate of the present invention used as it is, or may be a product obtained by fixing the fibrous columnar structure aggregate of the present invention to a backing.

Specifically,such pressure-sensitive adhesivemember is, for example, a pressure-sensitive adhesive sheet or a pressure-sensitive adhesive film.

Examples of the backing that may be used for such pressure-sensitive adhesive member include quartz glass, silicon (such as a silicon wafer), an engineering plastic, and a super engineering plastic. Specific examples of the engineering plastic and the super engineering plastic include polyimide, polyethylene, polyethylene terephthalate, acetylcellulose, polycarbonate, polypropylene, and polyamide.

The thickness of the backing that may be used for such pressure-sensitive adhesive member may be set to any appropriate value depending on purposes. The thickness of such backing is preferably 1 µm to 10,000 µm, more preferably 5 µm to 5,000 µm, still more preferably 10 µm to 1,000 µm.

The surface of the backing that may be used for such pressure-sensitive adhesive member may be subjected to a conventional surface treatment, e.g., a chemical or physical treatment such as a chromic acid treatment, exposure to ozone, exposure to a flame, exposure to a high-voltage electric shock, or an ionizing radiation treatment, or a coating treatment with an under coat (such as the above-mentioned adherent material) in order that adhesiveness with an adjacent layer, retentivity, or the like may be improved.

The backing that may be used for such pressure-sensitive adhesive member may be a single layer, or may be a multilayer body.

When the fibrous columnar structure aggregate of the present invention is fixed to the backing, any appropriate method may be adopted as a method of fixing the aggregate. For example, the aggregate may be fixed by providing the backing with an adhesion layer. Further, when the backing is a thermosetting resin, the aggregate has only to be fixed by performing a curing treatment. In addition, when the backing is a thermoplastic resin, a metal, or the like, the aggregate has only to be fixed by crimping one end of each fibrous columnar structure in a state in which the backing is molten, and cooling the resultant to room temperature.

### Examples

Hereinafter, the present invention is described in more detail by way of examples. However, the present invention is not limited to these examples. It should be noted that unless otherwise stated, "part(s)" and "%" in the examples are "part(s) by weight (mass)", and "wt% (mass%)", respectively.

### <<Measurement of surface roughness Ra>>

Measurement was performed with a Color 3D Laser Microscope "VK-8700/9700" (shape analysis application "VK-H1A1") manufactured by KEYENCE CORPORATION in accordance with "Arithmetic average roughness (Ra)" in JIS B0601-1994.

### <<Measurement of adhesion strength between plurality of fibrous columnar structures and surface of substrate>>

A tip of each of the fibrous columnar structures of a fibrous columnar structure aggregate was attached to a pressure-sensitive adhesive tape (manufactured by NITTO DENKO CORPORATION, 31B) by being crimped on the tape by rolling a 5-kg roller from one end to the other and back, and the resultant was left to stand for 30 minutes and then pulled with a tensile tester (Instron Tensil Tester) at a tension speed of 50 mm/min. After it had been confirmed that the peeling surface was an interface between the substrate and the fibrous columnar structures, a shear strength per unit area was determined and defined as an adhesion strength.

### (Example 1)

Stainless steel (SUS430, surface finish: BA, thickness: 40 µm, surface roughness Ra: 138 nm, manufactured by JX Nippon Mining & Metals Corporation) was used as a substrate, and an Al₂O₃ thin film (thickness: 20 nm) was formed thereon with a sputtering apparatus (manufactured by ULVAC, RFS-200). An iron thin film (thickness: 1 nm) was further deposited from the vapor on the Al₂O₃ thin film with a sputtering apparatus (manufactured by ULVAC, RFS-200). After that, the substrate was placed in a quartz tube, and a helium/hydrogen (90/50 sccm) mixed gas kept at a moisture content of 600 ppm was flowed through the quartz tube for 30 minutes to purge the inside of the tube. After that, the temperature was stabilized at 765°C with an electric tubular furnace. While the temperature was kept, the inside of the tube was filled with a helium/hydrogen/ethylene (85/50/5 sccm, moisture content: 600 ppm) mixed gas, and the tube was left to stand for 60 minutes to grow carbon nanotubes on the substrate. The resultant carbon nanotubes were multi-walled nanotubes each having 2 to 10 walls and a length of 311 µm.

The resultant fibrous columnar structure aggregate was evaluated for its adhesion strength between the plurality of carbon nanotubes and the surface of the substrate.

Table 1 shows the result.

### (Example 2)

Carbon nanotubes were grown on a substrate in the same manner as in Example 1 except that a rolled copper foil (HA, C1100, thickness: 17 µm, surface roughness Ra: 191 nm, manufactured by JX Nippon Mining & Metals Corporation) was used as the substrate. The resultant carbon nanotubes were multi-walled nanotubes each having 2 to 10 walls and a length of 305 µm.

The resultant fibrous columnar structure aggregate was evaluated for its adhesion strength between the plurality of carbon nanotubes and the surface of the substrate.

Table 1 shows the result.

### (Example 3)

Carbon nanotubes were grown on a substrate in the same manner as in Example 1 except that a rolled copper foil (HA, C1100, thickness: 35 µm, surface roughness Ra: 208 nm, manufactured by JX Nippon Mining & Metals Corporation) was used as the substrate. The resultant carbon nanotubes were multi-walled nanotubes each having 2 to 10 walls and a length of 289 µm.

The resultant fibrous columnar structure aggregate was evaluated for its adhesion strength between the plurality of carbon nanotubes and the surface of the substrate.

Table 1 shows the result.

### (Example 4)

Carbon nanotubes were grown on a substrate in the same manner as in Example 1 except that stainless steel (SUS304-HTA, thickness: 30 µm, surface roughness Ra: 262 nm, manufactured by JX Nippon Mining & Metals Corporation) was used as the substrate. The resultant carbon nanotubes were multi-walled nanotubes each having 2 to 10 walls and a length of 275 µm.

The resultant fibrous columnar structure aggregate was evaluated for its adhesion strength between the plurality of carbon nanotubes and the surface of the substrate.

Table 1 shows the result.

### (Example 5)

Carbon nanotubes were grown on a substrate in the same manner as in Example 1 except that an electrolytic copper foil (JTCS, thickness: 35 µm, surface roughness Ra: 270 nm, manufactured by JX Nippon Mining & Metals Corporation) was used as the substrate. The resultant carbon nanotubes were multi-walled nanotubes each having 2 to 10 walls and a length of 333 µm.

The resultant fibrous columnar structure aggregate was evaluated for its adhesion strength between the plurality of carbon nanotubes and the surface of the substrate.

Table 1 shows the result.

### (Example 6)

Carbon nanotubes were grown on a substrate in the same manner as in Example 1 except that stainless steel (SUS304-HTA, thickness: 70 µm, surface roughness Ra: 780 nm, manufactured by JX Nippon Mining &Metals Corporation) was used as the substrate. The resultant carbon nanotubes were multi-walled nanotubes each having 2 to 10 walls and a length of 342 µm.

The resultant fibrous columnar structure aggregate was evaluated for its adhesion strength between the plurality of carbon nanotubes and the surface of the substrate.

Table 1 shows the result.

### (Example 7)

Carbon nanotubes were grown on a substrate in the same manner as in Example 1 except that an electrolytic copper foil (JTCS, thickness: 70 µm, M surface, surface roughness Ra: 1,319 nm, manufactured by JX Nippon Mining & Metals Corporation) was used as the substrate. The resultant carbon nanotubes were multi-walled nanotubes each having 2 to 10 walls and a length of 360 µm.

The resultant fibrous columnar structure aggregate was evaluated for its adhesion strength between the plurality of carbon nanotubes and the surface of the substrate.

Table 1 shows the result.

### (Comparative Example 1)

Carbon nanotubes were grown on a substrate in the same manner as in Example 1 except that a P type silicon wafer (thickness: 525 µm, surface roughness Ra: 20 nm, manufactured by Silicon Technology Co. , Ltd.) was used as the substrate. The resultant carbon nanotubes were multi-walled nanotubes each having 2 to 10 walls and a length of 458 µm.

The resultant fibrous columnar structure aggregate was evaluated for its adhesion strength between the plurality of carbon nanotubes and the surface of the substrate.

Table 1 shows the result.

### (Comparative Example 2)

Carbon nanotubes were grown on a substrate in the same manner as in Example 1 except that an electrolytic copper foil (HLPLC, thickness: 20 µm, surface roughness Ra: 68 nm, manufactured by JX Nippon Mining & Metals Corporation) was used as the substrate. The resultant carbon nanotubes were multi-walled nanotubes each having 2 to 10 walls and a length of 351 µm.

The resultant fibrous columnar structure aggregate was evaluated for its adhesion strength between the plurality of carbon nanotubes and the surface of the substrate.

Table 1 shows the result.

### (Comparative Example 3)

Carbon nanotubes were grown on a substrate in the same manner as in Example 1 except that an electrolytic copper foil (JTCS, thickness: 35 µm, M surface, surface roughness Ra: 2,267 nm, manufactured by JX Nippon Mining & Metals Corporation) was used as the substrate. The resultant carbon nanotubes were multi-walled nanotubes each having 2 to 10 walls and a length of 325 µm.

The resultant fibrous columnar structure aggregate was evaluated for its adhesion strength between the plurality of carbon nanotubes and the surface of the substrate.

Table 1 shows the result.

**[Table 1]**

| | Surface roughness Ra (nm) | Adhesion strength (N/cm²) |
|---|---|---|
| Example 1 | 138 | 27.5 |
| Example 2 | 191 | 41.9 |
| Example 3 | 208 | 71.0 |
| Example 4 | 262 | 63.3 |
| Example 5 | 270 | 66.0 |
| Example 6 | 780 | 59.1 |
| Example 7 | 1,319 | 28.6 |
| Comparative Example 1 | 20 | 17.0 |
| Comparative Example 2 | 68 | 22.2 |
| Comparative Example 3 | 2,267 | 23.4 |

### Industrial Applicability

The fibrous columnar structure aggregate of the present invention can be suitably used for pressure-sensitive adhesive members such as a pressure-sensitive adhesive sheet and a pressure-sensitive adhesive film.

### Reference Signs List

- **10**: fibrous columnar structure aggregate
- **1**: substrate
- **2**: fibrous columnar structure

## Claims

1. A fibrous columnar structure aggregate, comprising:
a substrate; and
a plurality of fibrous columnar structures provided on a surface of the substrate,
wherein:
one end of each of the plurality of fibrous columnar structures is adhered to the surface of the substrate; and
an adhesion strength between the plurality of fibrous columnar structures and the surface of the substrate is 25 N/cm² or more at 25°C.

2. A fibrous columnar structure aggregate according to claim 1, wherein the substrate has a surface roughness Ra of 50 nm to 2,000 nm.

3. A fibrous columnar structure aggregate according to claim 1 or 2, wherein a material for the substrate has a melting point of 500°C or more.

4. A fibrous columnar structure aggregate according to any one of claims 1 to 3, wherein a growth substrate on which the plurality of fibrous columnar structures are to be grown is used as it is as the substrate.

5. A fibrous columnar structure aggregate according to any one of claims 1 to 4, wherein the fibrous columnar structures comprise carbon nanotubes.

6. A pressure-sensitive adhesive member, comprising the fibrous columnar structure aggregate according to any one of claims 1 to 5.
